# EUROPEAN PATENT SPECIFICATION

(11) **EP 1 416 037 B1**
(45) Date of publication and mention of the grant of the patent: **21.02.2007**
(21) Application number: 02425667.9
(22) Date of filing: 31.10.2002
(51) Int. Cl.: C11B 3/00, B01D 61/14

(54) **Olive oil physical treatment procedure**
Verfahren zur physikalischen Behandlung von Olivenöl
Traitment physique d'huile d'olives

(43) Date of publication of application: 06.05.2004
(73) Proprietor: Carapelli Firenze S.p.A, 50028 Tavarnelle val di Pesa (FI) (IT)
(72) Inventor: Mattei, Alissa, c/o Carapelli Firenze S.p.A., 50028 Tavarnelle Val di Pesa, Firenze (IT); Marotta, Federico, c/o Carapelli Firenze S.p.A., 50028 Tavarnelle Val di Pesa, Firenze (IT); Capannelli, Gustavo, Univ. degli Studi di Genova, 16146 Genova (IT); Bottino, Aldo, c/o Univ. degli Studi di Genova, 16146 Genova (IT); Turchini, Anna, c/o Univ. degli Studi di Genova, 16146 Genova (IT)
(74) Representative: Long, Giorgio

(56) References cited:
- EP-A- 0 405 657
- WO-A-01/89674
- DE-A- 3 244 007
- FR-A- 1 374 797
- FR-A- 2 760 756
- US-A- 4 545 940
- US-A- 5 516 924
- US-B1- 6 207 209
- KORIS A., VATAI G.: "Dry degumming of vegetable oils by membrane filtration" DESALINATION, ELSEVIER SCIENTIFIC PUBLISHING CO, AMSTERDAM, NL, [Online] vol. 148, no. 1-3, 10 September 2002 (2002-09-10), pages 149-153, XP004386587 ISSN: 0011-9164 Retrieved from the Internet: <URL:http://www.elsevier.com/locate/desal> [retrieved on 2003-02-21]
- SUBRAMANIAN R., NAKAJIMA M.: "Membrane degumming of crude soybean and rapeseed oils" JOURNAL OF THE AMERICAN OIL CHEMISTS' SOCIETY, AMERICAN OIL CHEMISTS' SOCIETY. CHAMPAIGN, US, vol. 74, no. 8, 1 August 1997 (1997-08-01), pages 971-975, XP000699128 ISSN: 0003-021X
- ALICIEO T.V.R., MENDES E.S., PEREIRA N.C., MOTTA LIMA O.C.: "Membrane ultrafiltration of crude soybean oil" DESALINISATION, [Online] vol. 148, 10 September 2002 (2002-09-10), pages 99-102, XP004386578 Elsevier Scientific Publishing Co., Amsterdam, NL ISSN: 0011-9164 Retrieved from the Internet: <URL:http://www.desline.com/articoli/4651. pdf> [retrieved on 2003-02-21]
- SNAPE J.B., NAKAJIMA M.: "Processing of agricultural fats and oils using membrane technology" JOURNAL OF FOOD ENGINEERING, [Online] vol. 30, no. 1-2, 11 October 1996 (1996-10-11), page 1-41 XP002233489 Elsevier Science Ltd. ISSN: 0260-8774 Retrieved from the Internet: <URL:http://www.sciencedirect.com> [retrieved on 2003-02-21]
- RAMAN L.P., RAJAGOPALAN N., CHERYAN M.: "MEMBRANE TECHNOLOGY" OILS AND FATS INTERNATIONAL, INTERNATIONAL TRADE PUBLICATIONS, REDHILL,, GB, vol. 10, no. 6, 1994, pages 28,30-32,34-35,38, XP000943147 ISSN: 0267-8853

## Description

The present invention relates to a process for the physical treatment, in particular the purification, of virgin olive oil which can have slight organoleptic or qualitative defects relating to the chemical and physico-chemical parameters or for the hydro-solubilisable contaminant content (phytochemicals or other contaminants), with the aim of stabilising and enhancing the quality without resorting to refinement methods.

The procedure according to the present invention allows the increase of the nutritional, chemical, physico-chemical, organoleptic qualities of the virgin olive oil and its stability over time, so as to obtain at the same time a clarified, stabilised oil of high quality.

### STATE OF THE ART

Olive oil is a fundamental component of the Mediterranean diet. Virgin olive oil is none other than the extracted juice of a fruit (devoid of the aqueous fraction) and is to be considered an ideal dressing, thanks to its physico-chemical, nutritional characteristics and to its flavour. It is in fact comprised of a high percentage of oleic acid, a monounsaturated fat of which the anti-atherosclerotic properties are known in the scientific literature, a low concentration of saturated fatty acids, a correct dose for the daily intake of polyunsaturated fatty acids (which the human body is not capable of synthesising) and lastly of vitamins (vitamin E) and antioxidants (phenolic compounds). But the important functions of olive oil do not stop there. Clinical studies and experiments continue to demonstrate that a balanced diet, with a significant olive oil intake, reduces the level of LDL concentrations in the blood and improves the LDL/HDL ratio with the beneficial consequences of a reduction in the risk of atherosclerosis. At the same time the phenolic compounds, performing their role as natural antioxidants, are very important in the prevention of tumours and cardiovascular diseases, as recent medical research is bringing ever more to light. The main aspects which, in the context of olive oil characterise quality, are the organoleptic characteristics, stability to oxidation, the absence of contaminants, such as phytochemicals, phytohormones, antiparasitic agents, hydrocarbon and halogen derivative solvents, and, naturally, the nutritional characteristics expressed in terms of the saturated, monounsaturated and polyunsaturated fatty acid content, the presence of phytosterols, vitamins and natural antioxidants.

To date, as is known, the rational use of pesticides is necessary, in the absence of valid alternatives, to increase olive grove productivity. One of the principal agricultural problems for the growth of olives is that this plant and its fruit are very sensitive to attack by a great number of insects and parasites which greatly lower the production of healthy olives and therefore oil. Traces of pesticides or their metabolites are sometimes present, notwithstanding their biodegradability, in the olives. Amongst the microcontaminants, heavy metals are also present, due for example to the nearness of the olive grove to major roads or to industrial locations. For these reasons, the possibility therefore of obtaining great quantities of biological oil derived from olives cultivated without the presence of contaminants seems very unlikely.

Furthermore, the oil's nutritional components are not constant within the various oil types, they depend in fact on various factors among which the type of cultivar, the cultivation methods, the type of collection and pressing of the oil, unseasonal climatic conditions and, in addition, can be easily degraded by the presence of light and oxygen. The oil therefore, even if correctly preserved, a year on from its pressing, may have lost a great part of its qualitative characteristics, as a result oxidative phenomena facilitated by the presence of numerous compounds, with pro-oxidant characteristics. Amongst these, chlorophylls (the photosynthetic pigments of green plants), which are metallo-porphyrins constituted of four pyrrolic rings variously substituted and bound to a magnesium atom, in the presence of oxygen and light they act as catalysts, favouring oxidation phenomena which occur in the oil.

Furthermore, the oil extracted from olive paste, even if purified by centrifugation, still contains water in emulsion, particles of fruit and mucilage in suspension which retain enzymatic activity, damaging for the preservation of the oil.

The treatment of virgin olive oil currently practised envisages a filtration step carried out with press filters where the filter component is made up of panels of diatomaceous earth. Such a procedure, although now largely consolidated, partially alters the chemical and organoleptic characteristics and causes the loss of the oil withheld within the panels. The filtration is optionally followed by a clarification step on paper filters. The claims of the present patent also refer to this important aspect.

EP405657 disclose a method for refining virgin olive oil which consists of one step of microfiltration only. The oil to be filtered is oil and not a mixture oil-water.

DE3244007A1 disclose a method for degumming oil in which a hydrophobic membrane is used. A similar disclosure may be found in US4545940.

US5516924 disclose a method for degumming oils in which no pretreatment of the membrane takes place.

The problems outlined remain at the foundation of the present invention which is intended to provide an edible oil working procedure, in particular virgin olive oil, which allows the attainment of an oil purified from potential contaminants, while conserving all the qualitative characteristics (organoleptic and chemical) which characterise a high quality olive oil.

Such a problem is resolved by the oil physical treatment procedure as outlined in the attached claims.

### DESCRIPTION OF THE INVENTION

Although the procedure of the invention is applicable to any type of non-refined, edible oil, in the description hereinafter, particular reference to the treatment of virgin olive oil will be made.

The inventors of the present patent application have developed a procedure for the physical treatment of virgin olive oil so as to obtain a more stable product over time, of improved flavour, lower free acidity and devoid of hydrosoluble contaminants.

With the present invention it is in fact possible to stabilise and balance the chemical and organoleptic characteristics of the starting oil, reducing for example the overly heavy aromas of the oil, such as these that become defects, remove undesired compounds, reduce the level of oxidation and acidity of the treated oil, increase the stability of the nutritional components present in the starting oil.

The procedure of the invention comprises, as an essential step, a filtration treatment of the virgin olive oil to purify, to stabilise or with the above cited light defects, using nanoporous membranes. By the term "nanoporous membranes" is intended membranes having a porosity comprised of between 1.0 and 200 nm. More preferably, membranes with porosity less than 100 nm are used.

The membrane processes technology is a safe and low environmental impact technology. The principal characteristic of such technology is that the solution, suspension or emulsion to filter is kept agitated or made to flow tangentially with respect to the membrane, with the consequence that, operating appropriately, for example on the tangential flow rate, it is possible to create a turbulence on the filter surface so as to remove or to control the layer of particles which tends to deposit on the filter and occlude the pores.

The process is preferably carried out by making the oil flow under pressure comprised of between 0.1 and 20 bar, more preferably between 1 and 6 bar, and with a tangential flow rate comprised of between 0.5 and 10 m/s, preferably between around 2 and 6 m/s. A temperature comprised of between 5°C and 50°C, preferably between 20°C and 30°C, will be particularly indicated so as to favour the permeation of the oil without damaging the oil itself.

The membranes usable in the procedure of the invention can be of inorganic type. The inorganic membranes will be preferably based on titanium, zinc or aluminium oxide with a carbon, metallic or ceramic macroporous support. The ceramic membranes, which do not have an intrinsic hydrophobic nature, will however be made hydrorepellent by treatment with hydrophobicising means. By the term "treatment with a hydrophobicising means" is intended a treatment with a means capable of conferring hydrophobicity to the membrane such as, for example, an appropriate chemical or physical treatment, such as superficial chemical or plasma "grafting", or a treatment of the membrane with a hydrophobic fluid capable of leaving a hydrorepellent film on the membrane. Such hydrophobic fluid could be any oil compatible with a food application and, more preferably, the same food oil it is intended to process.

The selection of the most suitable membrane is performed according to the nature of the contaminants or of the undesired substances contained in the olive oil to be treated. It is in fact known that olive oil, in particular virgin olive oil, can have different physico-chemical and organoleptic characteristics according to its variety and origin. For example, Greek olives have higher wax and chlorophyll contents. In particular, chlorophyll, as said previously, can function as a pro-oxidant and therefore alter the conservability of the oil. *Vice versa,* the olives produced in Andalusia, in Spain, have non-optimal organoleptic characteristics (the presence of a dominant eucalyptus "flavour").

The removal of pro-oxidant compounds will be carried out by treatment with nanoporous ceramic membranes, and in particular the chlorophyll will be removed by nanoporous membranes with carbon supports. The operation performed can be as a first approximation compared to a molecular level filtration. The separation of the molecules takes place by exploiting some of their typical properties such as for example morphological structure, chemical composition, the size and shape of the pores, surface charge, and properties of the solutes such as the form, surface tension, the sizes or the hydrodynamic volume.

Other defects present in the starting oil such as excess acidity, the presence of phytochemicals or aromatic polycyclic hydrocarbons, can be eliminated by subjecting the oil, prior to filtration on a nanoporous membrane, to washing with ultrapure water (demineralised and bacteriologically pure water) or water added with a basic salt, for example a carbonic acid salt such as potassium carbonate, so as to obtain a pH value of 8-9.

The washing step with water is performed by putting the oil in contact with an aqueous phase with agitation and removing the oil by filtration on a hydrophobic nature nanoporous membrane, such as those described above. To that end, the membrane, if not already hydrophobic in nature, will undergo a pre-treatment with oil, which will adsorb onto the membrane rendering it completely hydrophobic for later use. Operating in this manner, the free or emulsioned water does not manage to pass through the membrane in that it is blocked on its hydrorepellent surface, whilst the oil permeates through the membrane.

The operation described herein above brings about the elimination of the previously mentioned contaminants from the oil. In fact in the aqueous phase are easily partitioned the hydrosoluble substances such as for example the hydrophilic phenolic compounds, compounds responsible for the bitterness of the oil, the hydrophilic pesticides, oxidation products, and such like. Furthermore, in the case of the use of water with a slightly basic pH, it is possible to partially neutralise the acidity of the free fatty acids, correcting, if necessary, the acidity of the starting oil.

It is important to underline the dual advantage of the fact that the aqueous phase is completely withheld by the membrane. First of all this brings about the total elimination of the hydrophilic contaminants of the oil. In addition, the absence of water in the final oil phase avoids the presence of an emulsion which can bring about the clouding of the product. The same advantages can obviously not be gained in the case of filtration through hydrophilic membranes, in which it is the water which permeates through the membrane. In fact in that case, a portion of the water, and therefore the contaminants dissolved in it, would inevitably remain trapped within the oil phase.

In the procedure of the invention, on the contrary, a small portion of the oil remains trapped within the aqueous phase retained by the membrane (concentrate phase). The natural substances, hydrophilic in nature, remain however in the aqueous phase and are eliminated from the oil. In a particular embodiment of the present invention, a step for the recovery of the natural substances extracted in the aqueous phase is therefore envisaged. Such a recovery phase can be carried out by extraction and partition of the less abundant substances which can be used in the food and cosmetics industries.

According to a further embodiment of the invention, the oil is subjected to an initial treatment which consists of at least one filtration step, for example through non-woven fabric with porosity of 10-50 µm, or through paper filters. This operation allows the elimination of a major part of the gross solids suspended in the newly-pressed oil, increasing therefore the permeation speed of the nanoporous membrane filtration step.

It is to be noted that the procedure of the invention is particularly advantageous in that it allows the attainment of a pure and high quality oil without the use of any chemical reagents.

Clarification with nanoporous materials, such as the membranes with porosity less than 200 nm, allows the removal from the oil of all the substances that, over time, compromise quality by favouring the phenomena of oxidation, hydrolysis and fermentation.

The membrane filtration process according to the invention is an innovative purification process, very versatile, and clean which, for its characteristics, is completely analogous and less polluting than the filtration processes which are currently used.

The invention will now be further described by means of some examples of embodiments herein included in a nonlimiting manner.

### Example A - General oil treatment method with nanoporous membranes

The edible oil for treatment is sent to the filtration module formed by one or more membranes in parallel or in series with a pressure (0.1-20 bar) such as to allow permeation through the nanoporous membranes. In this manner, it is possible to obtain, depending on the type of membrane used (porosity, chemical nature, etc.) a permeating current constituted of oil which, passing through the membrane results as being purified of mucilage, nanodisperse water, compounds which render the aroma of the oil too heavy and chlorophyll, and a concentrate rich in impurities, which can however be removed, recovering the oil by classic refining. The entire process must be carried out in such a way as to maintain a temperature that is not too high (possibly less than 50°C) so as not to damage the thermolabile components of the oil. The oil is made to permeate across membranes having porosity less than 0.2 µm.

### Example 1 - Procedure for the removal of Chlorophyll from virgin olive oil

### A. Operative conditions

The nanoporous membrane filtration step envisages that the crude oil is treated by tangential flow filtration. The membrane used is of TiO₂ on carbon type. Although such a membrane is not hydrophobic in itself, upon contact with oil it immediately forms a hydrophobic film which influences the nature and the behaviour of the membrane. With that aim, equipment made entirely of stainless steel is used, composed of a feeder tank which contains the oil for treatment (approx. 5 1) and a geared pump which withdraws the oil and sends it to the module where the membranes are housed, supplying the pressure and the tangential velocity necessary for the process. The working pressure (2-6 bar) is controlled by a manual regulation valve placed downstream of the module and measured with a Bourdon type manometer whilst feed delivery, or the tangential flow rate at the membrane surface, is regulated (1-6 m/s) through a converter of the number of revolutions of the pump and measured by a magnetic induction rotameter. Inside the tank is arranged a coil where a water current circulates to control the temperature of the oil. Two currents exit from the module: the permeate or filtrate (the current which permeates across the membrane) and the retentate or concentrate.

Tests have been carried out by maintaining the food concentration constant, continuously recycling both the permeate and the concentrate to the feed reservoir. The duration of each test varied from one to three hours. The permeate flow rate has been measured at regular time intervals. From the samples of permeate and concentrate withdrawn an average sample has been obtained which has then been analysed. The results are reported in Table 1.

### B. Oil sample subjected to treatment and the aim of the test.

A sample of standard virgin olive oil has been subjected to filtration treatment. In this example the trial consisted of attempting to lower the chlorophyll content by filtration.

### C. Comparative analysis

A membrane with active selective Carbon/TiO₂ support and a porosity of 0.1 µm has been used.

The analyses performed and the relative methods have been the following:

### Analyses

| **Method** | **Analyses** |
|---|---|
| ■ Chlorophyll content | AOCS Cc13i-96 (1997) |

**Table 1 - Chlorophyll removal**

| | **Units of measurement** | **Starting sample** | **Filtered oil** |
|---|---|---|---|
| Chlorophyll | ppm | 5,43 | 0,77 |

The data reported in the table point out a marked reduction in the chlorophyll content of the oil, in agreement with that expected in the experimental design, and hence a drastic decrease of the pro-oxidant potential present in the starting oil.

### Example 2 - Procedure for the improvement of the organoleptic characteristics of virgin olive oil samples with marked origin typical of Andalusia (eucalyptus flavour).

### A. Operative conditions

A TiO₂ deposited on a carbon support membrane has been used, and a tangential filtration of the oil has been performed according to the above-described method, with the following operative conditions: P=4 bar; T= 30°C V_{R}=1 m/s.

### B. Oil sample subjected to treatment and the aim of the test.

A sample of virgin olive oil which showed the marked Spanish characteristics of originating from Andalusia with eucalyptus organoleptic sensations, characteristic of this origin, has been subjected to filtration treatment.

### C. Comparative analyses

The samples subjected to treatment, as for the operative procedure, have been analysed in detail. The aim of the experiment was to be able to obtain an oil which did not present a marked origin without moreover altering the physico-chemical parameters of the starting oil.

The samples have been subjected to the following analyses:

| **Analyses** | **Method of analysis** |
|---|---|
| ■ Acidity | Reg. (CEE) 2568/91 All. II |
| ■ Peroxide number | Reg. (CEE) 2568/91 All. III |
| ■ U.V. absorbance | Reg. (CEE) 2568/91 All. IX |
| ■ Organoleptic evaluation | Reg. (CEE) 2568/91 All. XII |
| | + Panel Test (¹) |
| ■ Flavour | Flavour method (²) |

| | |
|---|---|
| (¹) Description of the Panel Test: this method divides both the positive and negative characteristics of the sample, into aroma and taste characteristics. Each attribute is expressed on a score scale which ranges from 0 to 5 (0=absent, 1=just detectable, 2=light, 3=medium, 4=heavy, 5=extreme). In addition the colour, mellowness tactile sensation and the grade of general harmony-equilibrium of the sample are also analysed; these three attributes are expressed on a continuous scale of 0 to 5. (²) Flavour Method Description: this method consists of analysing the volatile components of the sample responsible for the positive and negative olfactory (aroma) sensations, analysed by means of HPLC-MS following derivatisation of the carbonylic components. | |

The analyses have been carried out by Dr. N. Cortesi and Dr. P. Rovellini of the Stazione Sperimentale Oli e Grassi.

The results of the analyses carried out on the oil samples before and after filtration treatment are reported in the following tables 2, 3 and 4.

**Table 2: acidity, peroxide number and U.V. absorbance**

| | Units of measurement | Starting sample | Filtered oil |
|---|---|---|---|
| Acidity | % oleic acid | 0.17 | 0.19 |
| Peroxide number | meq O₂/Kg | 11.9 | 12.3 |
| K₂₃₂ | | 1.55 | 1.64 |
| K₂₇₀ | | 0.10 | 0.12 |
| ΔK | | -0.001 | -0.001 |

**Table 3: organoleptic characteristics (operative conditions)**

| | Units of measurement | Starting sample | Filtered oil |
|---|---|---|---|
| Bitterness | Intensity 0-5 | 3 | 2 |
| Eucalyptus | Intensity 0-5 | 3 | 0 |
| Judgement | | Clean bitter oil with heavy origin | Sweeter oil with respect to the starting material, without origin |

**Table 4: carbonylic flavour compounds**

| | Units of measurement | Starting sample | Filtered oil |
|---|---|---|---|
| Hexanal | Ppm | 43.5 | 14.3 |
| Nonenal | Ppm | 20.8 | 6.9 |
| Nonanal + nonanone | Ppm | **355.5** | **101.8** |
| Total | Ppm | **814** | **381** |

### D. Comments

As reported in the tables, in the tests performed, no variations in the physico-chemical parameters of the sample occurred following filtration, in fact all the parameters are unchanged and within the analytical variability. Instead substantial differences are noted between the two samples from the organoleptic point of view: the starting sample is bitter with a clear Andalusian origin, expresses by the positive flavour characteristic of eucalyptus (3 scores), instead the filtered sample becomes sweeter loosing the origin (eucalyptus 0) and becomes more harmonious. These differences, shown by tasting, are confirmed by the analyses of the volatile components, which are reduced in the filtered sample. Above all, the reduction of some components which, in the study, have been correlated with bitter, green and eucalyptus sensations is noted.

Therefore the possibility of modifying and improving an oil, with a simple filtration operation, whilst not altering the basic characteristics is extremely interesting.

### Example 3 - Virgin olive oil oxidation state modification procedure

### A. Operative conditions

The samples have been obtained through a membrane tangential filtration in the previously described manner and operating under the following conditions P= 4 bar, T=30°C V_{R}= 2 m/s. The membrane used has a TiO₂ selective layer with carbon support.

### B. Oil sample subjected to treatment and the aim of the test.

A sample of standard virgin olive oil has been subjected to filtration treatment. The aim of the test was that of improving the oxidation parameters of the sample by passing through a filter.

### C. Comparative analysis

The following analyses have been carried out on samples subjected to treatment, as per the operative procedure:

| Analyses | Method of analysis |
|---|---|
| ■ Acidity | Reg. (CEE) 2568/91 All. II |
| ■ Peroxide number | Reg. (CEE) 2568/91 All. III |
| ■ U.V. Absorbance | Reg. (CEE) 2568/91 All. IX |
| ■ Oxidative state | Method HPLC (³) |

| | |
|---|---|
| (³) Description of the HPLC method: the samples are analysed by HPLC to underline the diene, triene, hydroperoxide and double bonded ketones content, which are characteristic of oxidation. | |

The analyses were performed by Dr. N. Cortesi and Dr. P. Rovellini of the Stazione Sperimentale Oli e Grassi.

The results of the analyses carried out on the oil samples, before and after treatment, are reported in tables 5 and 6:

**Table 5: acidity, peroxide number and U.V. absorbance**

| | Units of measurement | Starting sample | Filtered oil |
|---|---|---|---|
| Acidity | % oleic acid | 0.45 | 0.44 |
| Peroxide number | meq O₂/Kg | 10.0 | 10.3 |
| K₂₃₂ | | 2.12 | 2.10 |
| K₂₇₀ | | 0.14 | 0.15 |
| ΔK | | -0.002 | -0.002 |

**Table 6: fatty acid composition**

| | Units of measure ment | Starting sample | Filtered oil |
|---|---|---|---|
| Trienes 18:3 | % | 0.56 | 0.44 |
| Dienes cis, trans 18:2 | % | 1.55 | 1.36 |
| Hydroperoxides | % | 0.20 | 0.19 |
| 18:3 | | | |
| ketotrienes 18:3 | % | 3.90 | 3.27 |
| Ketodienes 18:2 | % | 0.39 | 0.35 |
| Total oxidation | % | 10.91 | 10.69 |

### D. Comments.

As underlined in the tables, in the tests carried out, no changes in the parameters for acidity, peroxides and U.V. absorbance occurred which have remained practically unaltered. On the contrary, in the samples treated by nanoporous membrane filtration, a reduction in the percentage of molecules responsible for oxidation, in particular the trienes 18:3 is observed.

### Example B - General treatment method of oil with nanoporous membranes and water.

### A. Operative conditions

The procedure is carried out in an appropriately constructed cell for the treatment of small volumes of foodstuffs and substantially comprised of a transparent graduated cylinder with a capacity of 200 ml, equipped with a cover with an aperture for supplying the foodstuff or for gas entry (air or nitrogen) which guarantees the pressure required for the process, and a safety valve. A magnetic stirrer is connected to the cover which, when rotating, ensures a certain degree of turbulence at the surface of the membrane, of approx. 45 mm in diameter. The latter is fixed between the cylinder and the lower base, which contains a porous septum for drainage and collection of the permeate, which after exiting, is collected and analysed.

The process envisages that the membrane be firstly placed in contact with just oil (for a few minutes) to create an oily film on the filter surface capable of completely impeding contact between the aqueous phase and the membrane surface and therefore the passage of water. The water is added only after the oil has begun to permeate. The ultrapure water (deionised, demineralised and bacteriologically pure) is added in differing quantities (5%, 15%, 30% and 40% in volume) and at two different pH values, i.e. slightly acidic pH 6.8 and slightly basic pH 8; during the process, repeated additions of just oil can be made, so as to maintain the system in a constant concentration ratio with respect to water as the oil permeates.

The process is carried out by maintaining the oil and water mixture under stirring or by recycling it so as to favour the formation of an emulsion which is then separated on the membrane surface that, due to its chemical properties (hydrophobicity) or for the manner of execution (creation of an oil film on the surface) allows the passage only of the oil, retaining instead the water and therefore also all the molecules which are partitioned in it. The same results are obtainable using a tangential filtration apparatus with ceramic type nanoporous membranes.

## Claims

1. An edible oil treatment method comprising the following steps in the order:
a) providing a non-hydrophobic nanoporous membrane;
b) pre-treating said nanoporous membrane with oil;
c) contacting an edible oil with water;
d) filtering the oil/water mixture, obtained in step c) on said nanoporous membrane, obtained in step b).

2. The edible oil treatment method according to claim 1, in which said oil is the same edible oil that it is intended to process.

3. The edible oil treatment method according to claim 1 or 2, in which said nanoporous membranes are inorganic membranes preferably selected from titanium, zinc or aluminium oxide based membranes with carbon, metallic or ceramic macroporous support.

4. The edible oil treatment method according to any of the claims from 1 to 3, in which said nanoporous membrane has a porosity comprised of between 1 and 200 nm, preferably less than 100 nm.

5. The edible oil treatment method according to any of the claims from 1 to 4, in which said filtration step d) of the oil/water mixture through said nanoporous membrane is carried out under a pressure comprised of between 0.1 and 20 bar, preferably between 1 and 6 bar.

6. The edible oil treatment method according to any of the claims from 1 to 5, in which said oil/water mixture is kept moving or made to flow tangentially to said nanoporous membrane with a tangential flow rate comprised of between 0.5 and 10 m/s, preferably between around 2 and 6 m/s.

7. The edible oil treatment method according to any of the claims from 1 to 6, in which said filtration step d) of the oil/water mixture through said nanoporous membrane is carried out at a temperature between 20°C and 30°C.

8. The edible oil treatment method according to any claims 1 to 7, in which said water is demineralised and bacteriologically pure water.

9. The edible oil treatment method according to any claims 1 to 8, in which said water has a basic salt added so as to obtain a pH value of 8-9.

10. The edible oil treatment method according to claim 9, in which said basic salt is a salt of carbonic acid, preferably potassium carbonate.

11. The edible oil treatment method according to any of the claims from 1 to 10, in which said oil is previously subjected to a filtration step through non-woven-fabric with a porosity of 10-50 µm, or through a paper filter.

## Patentansprüche

1. Ein Verfahren zur Behandlung von Speiseöl, umfassend die folgenden Schritte in der Reihenfolge:
a) Bereitstellung einer nicht-hydrophoben, nanoporösen Membran,
b) Vorbehandlung der nanoporösen Membran mit Öl,
c) in Kontakt bringen eines Speiseöls mit Wasser,
d) Filtrieren des in Schritt c) erhaltenen Öl/Wasser-Gemisches auf der in Schritt b) erhaltenen nanoporösen Membran.

2. Das Speiseölbehandlungsverfahren nach Anspruch 1, wobei es sich bei dem Öl um das gleiche Speiseöl handelt, das verarbeitet werden soll.

3. Das Speiseölbehandlungsverfahren nach Anspruch 1 oder 2, wobei es sich bei den nanoporösen Membranen um anorganische Membrane handelt, die bevorzugt aus Membranen auf Titanoxid-, Zinkoxid- oder Aluminiumoxidbasis mit makroporösem Kohlenstoff-, Metall- oder Keramikträger ausgewählt werden.

4. Das Speiseölbehandlungsverfahren nach einem der Ansprüche 1 bis 3, wobei das nanoporöse Membran eine Porosität von 1 bis 200 nm, bevorzugt weniger als 100 nm aufweist.

5. Das Speiseölbehandlungsverfahren nach einem der Ansprüche 1 bis 4, wobei der Filtrationsschritt d) des Öl/Wasser-Gemisches durch das nanoporöse Membran unter einem Druck von 0,1 bis 20 Bar, bevorzugt 1 bis 6 Bar durchgeführt wird.

6. Das Speiseölbehandlungsverfahren nach einem der Ansprüche 1 bis 5, wobei man das Öl/Wasser-Gemisch tangential zu der nanoporösen Membran mit einer tangentialen Fließgeschwindigkeit von 0,5 bis 10 m/s, bevorzugt etwa 2 bis 6 m/s in Bewegung hält oder zum Fließen bringt.

7. Das Speiseölbehandlungsverfahren nach einem der Ansprüche 1 bis 6, wobei der Filtrationsschritt d) des Öl/Wasser-Gemisches durch das nanopröse Membran bei einer Temperatur von 20 °C bis 30 °C durchgeführt wird.

8. Das Speiseölbehandlungsverfahren nach einem der Ansprüche 1 bis 7, wobei es sich bei dem Wasser um entmineralisiertes und bakteriologisch reines Wasser handelt.

9. Das Speiseölbehandlungsverfahren nach einem der Ansprüche 1 bis 8, wobei dem Wasser ein basisches Salz zugegeben wird, um einen pH-Wert von 8 bis 9 zu erhalten.

10. Das Speiseölbehandlungsverfahren nach Anspruch 9, wobei es sich bei dem basischen Salz um ein Kohlensäuresalz, bevorzugt um Kaliumcarbonat handelt.

11. Das Speiseölbehandlungsverfahren nach einem der Ansprüche 1 bis 10, wobei das Öl zuvor einem Filtrationsschritt durch ein Faservlies mit einer Porosität von 10 bis 50 µm oder durch einen Papierfilter unterzogen wird.

## Revendications

1. Procédé de traitement d'une huile alimentaire comprenant, dans cet ordre, les étapes suivantes :
a) prévoir une membrane nanoporeuse non hydrophobe ;
b) pré-traiter ladite membrane nanoporeuse avec de l'huile ;
c) mettre une huile alimentaire en contact avec de l'eau ;
d) filtrer le mélange huile/eau, obtenu à l'étape c) sur ladite membrane nanoporeuse, obtenue à l'étape b).

2. Procédé de traitement d'une huile alimentaire selon la revendication 1, dans lequel ladite huile est la même huile alimentaire qu'il est prévu de traiter.

3. Procédé de traitement d'une huile alimentaire selon la revendication 1 ou 2, dans lequel lesdites membranes nanoporeuses sont des membranes inorganiques préférablement choisies parmi des membranes à base d'oxyde de titane, de zinc ou d'aluminium avec un support macroporeux de carbone, métallique ou céramique.

4. Procédé de traitement d'une huile alimentaire selon l'une quelconque des revendications 1 à 3, dans lequel ladite membrane nanoporeuse à une porosité comprise entre 1 et 200 nm, préférablement moins de 100 nm.

5. Procédé de traitement d'une huile alimentaire selon l'une quelconque des revendications 1 à 4, dans lequel ladite étape de filtration d) du mélange huile/eau à travers ladite membrane nanoporeuse est mise en oeuvre sous une pression comprise entre 0,1 et 20 bar, préférablement entre 1 et 6 bar.

6. Procédé de traitement d'une huile alimentaire selon l'une quelconque des revendications 1 à 5, dans lequel ledit mélange huile/eau est maintenu en mouvement ou est fait s'écouler tangentiellement à ladite membrane nanoporeuse avec un débit tangentiel compris entre 0,5 et 10 m/s, préférablement entre environ 2 et 6 m/s.

7. Procédé de traitement d'une huile alimentaire selon l'une quelconque des revendications 1 à 6, dans lequel ladite étape de filtration d) du mélange huile/eau à travers ladite membrane nanoporeuse est mise en oeuvre à une température entre 20°C et 30°C.

8. Procédé de traitement d'une huile alimentaire selon l'une quelconque des revendications 1 à 7, dans lequel ladite eau est de l'eau déminéralisée et bactériologiquement pure.

9. Procédé de traitement d'une huile alimentaire selon l'une quelconque des revendications 1 à 8, dans lequel ladite eau a un sel basique ajouté de manière à obtenir une valeur de pH de 8 à 9.

10. Procédé de traitement d'une huile alimentaire selon la revendication 9, dans lequel ledit sel basique est un sel d'acide carbonique, préférablement le carbonate de potassium.

11. Procédé de traitement d'une huile alimentaire selon l'une quelconque des revendications 1 à 10, dans lequel ladite huile est précédemment soumise à une étape de filtration à travers un textile non tissé avec une porosité de 10 à 50 µm, où à travers un filtre en papier.
